(19) **Europäisches Patentamt / European Patent Office / Office européen des brevets**

(11) **EP 3 501 168 B1**

(12) **FASCICULE DE BREVET EUROPEEN**

(45) Date de publication et mention
de la délivrance du brevet:
**02.07.2025 Bulletin 2025/27**

(21) Numéro de dépôt: **17749193.3**

(22) Date de dépôt: **08.08.2017**

(51) Classification Internationale des Brevets (IPC):
*H04N 5/782* (2006.01)    *H04N 21/433* (2011.01)
*H04N 21/432* (2011.01)    *H04N 5/775* (2006.01)
*H04N 21/442* (2011.01)    *H04N 21/45* (2011.01)

(52) Classification Coopérative des Brevets (CPC):
**H04N 5/782; H04N 5/775; H04N 21/4325;
H04N 21/4334; H04N 21/44222; H04N 21/4532;
H04N 21/454**

(86) Numéro de dépôt international:
**PCT/EP2017/070012**

(87) Numéro de publication internationale:
**WO 2018/033425 (22.02.2018 Gazette 2018/08)**

(54) **PROCÉDÉ DE DÉCLENCHEMENT AUTOMATIQUE D'UN MODE DIRECT DIFFÉRÉ**

VERFAHREN ZUM AUTOMATISCHEN AUSLÖSEN EINES DIREKTEN VERZÖGERTEN MODUS

METHOD FOR AUTOMATIC TRIGGERING OF A DIRECT DELAYED MODE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **19.08.2016 FR 1657819**

(43) Date de publication de la demande:
**26.06.2019 Bulletin 2019/26**

(73) Titulaire: **Sagemcom Broadband SAS
92270 Bois-Colombes (FR)**

(72) Inventeurs:
• **SEBIRE, Julien
92500 Rueil Malmaison (FR)**
• **HERRMANN, Laurent
92500 Rueil Malmaison (FR)**

(74) Mandataire: **Regimbeau
20, rue de Chazelles
75847 Paris Cedex 17 (FR)**

(56) Documents cités:
EP-A1- 2 618 562     JP-A- 2015 076 828
US-A1- 2003 046 696     US-A1- 2005 044 570
US-A1- 2007 058 930     US-A1- 2011 047 577
US-A1- 2016 029 085

# EP 3 501 168 B1

**Description**

**Domaine de l'invention**

L'invention a pour objet un procédé de déclenchement automatique d'un mode direct différé.
Le domaine de l'invention est celui des boîtiers décodeur de télévision.
Un boîtier décodeur est aussi connu sous le nom de « set-top box ». Un boîtier décodeur de télévision est un dispositif qui comporte au moins :

- des moyens de communication radio ou câblé pour recevoir des signaux de diffusion de télévision,
- des moyens de sélection d'un canal de diffusion parmi les signaux de diffusion reçus, et
- des moyens de production de signaux aptes à être reçu par un téléviseur.

Pour l'invention les signaux sont indifféremment analogiques ou numériques.
Plus particulièrement le domaine de l'invention est celui de la gestion d'un mode direct différé par un boîtier décodeur de télévision.
Le mode direct différé est aussi connu sous l'appellation « trick mode ».
Un mode direct différé est un mode de visualisation d'un programme diffusé en direct (on parle aussi de programme « live »), ce mode permettant la mise en pause de la diffusion et la navigation temporelle dans la diffusion. Par navigation temporelle on entend la capacité de faire défiler le programme en retour rapide ou en avance rapide. Il est entendu que l'avance rapide ne peut pas dépasser la date présente. Autrement dit, le mode direct différé ne permet pas de voir ce qui n'a pas encore été diffusé.

**Etat de la technique**

Dans l'état de la technique, pour pouvoir regarder, à coup sûr, en intégralité un programme télévisé, un utilisateur à plusieurs solutions à sa disposition.
Une première solution est connue sous le nom de télévision de rattrapage. On parle aussi de « catch up TV » ou de « replay ». Cette première solution nécessite une infrastructure réseau spécifique et conséquente à mettre ne place par le diffuseur. Cette infrastructure de rattrapage doit en particulier permettre :

- l'enregistrement de tous les programmes devant être rattrapables, et
- le service de toutes les requêtes de rattrapages émises de manière asynchrone par les utilisateurs.

Le boîtier décodeur doit aussi nécessairement disposer d'une connexion réseau active pour accéder en temps réel à l'infrastructure de rattrapage. Souvent en fonction de la technologie employée (exemple : HLS (http live streaming)), la fonction de direct différé n'est pas disponible via cette première solution.
Une deuxième solution est d'utiliser les fonctionnalités classiques d'enregistrement d'un boîtier décodeur. Avec un tel boîtier décodeur on peut programmer par avance l'enregistrement d'une émission que l'on souhaite visionner plus tard. Une telle programmation se fait via le guide de programme électronique (aussi appelé EPG) ou en sélectionnant une chaine puis en lançant manuellement l'enregistrement. Cette deuxième solution présente plusieurs inconvénients :

- Les enregistrements sont créés sur un disque dur et il faudra d'une manière ou d'une autre les effacer régulièrement pour libérer l'espace disque ;
- Du point de vue de l'utilisateur, celui-ci doit penser à programmer son enregistrement avant le début de son émission. Cette solution oblige ainsi l'utilisateur à porter son attention à autre chose que son programme présent et à maitriser des fonctions avancées du boîtier décodeur.

Le document JP2015076828 un procédé mis en œuvre par un boîtier décodeur, utilisant une liste d'enregistrements de programmes favoris.

**Exposé de l'invention**

L'invention vise à remédier à tout ou partie des inconvénients de l'état de la technique identifiés ci-dessus, et notamment à proposer des moyens pour permettre d'améliorer l'expérience utilisateur.
Dans l'invention on met en œuvre un procédé de déclenchement automatique d'un mode direct différé sur des programmes, ou des chaines, les plus regardées par l'utilisateur c'est à dire ses programmes favoris. Ces programmes les plus regardés sont déterminés en se basant sur un historique d'utilisation qui équivaut à des habitudes de visualisation.

Grace au procédé selon l'invention, l'utilisateur ne perd plus le début de ses programmes favoris s'il regarde une autre émission à ce moment-là ou s'il est en retard pour visionner un programme qu'il a l'habitude de regarder.

Le mécanisme de lancement automatique du mode direct différé permet de produire des enregistrements temporaires sans aucune action directe de la part de l'utilisateur. Cette production se fait en fonction des ressources disponibles, en particulier en fonction des capacités de réception du boîtier décodeur.

L'invention permet à un utilisateur voulant terminer le visionnage d'un programme diffusé en même temps qu'un programme habituel, de pouvoir regarder plus tard et dans son intégralité, le programme habituel et ce sans aucune action de sa part. Ainsi :

- Il n'est plus nécessaire de posséder un boîtier décodeur connecté à une infrastructure de rattrapage pour pouvoir visionner le début de son émission habituelle ;
- L'utilisateur n'a plus à penser à créer un enregistrement, le décodeur le fait automatiquement à sa place en fonction de ses habitudes. Il n'a pas non plus besoin de les supprimer car le décodeur gère cette fonctionnalité de manière temporaire à la différence d'un enregistrement classique sur disque dur.

Grace à cette invention, l'expérience utilisateur est améliorée car les actions manuelles de l'état de la technique antérieur, navigation dans un serveur de rattrapage ou programmation d'un enregistrement, ne sont plus nécessaires.

Dans ce dessein, un aspect de l'invention se rapporte à un procédé de déclenchement automatique d'un mode direct différé par un boîtier décodeur, tel que défini dans la revendication 1.

Outre les caractéristiques principales qui viennent d'être mentionnées dans le paragraphe précédent, le procédé selon l'invention peut présenter une ou plusieurs caractéristiques complémentaires définies dans les revendications dépendantes.

**Brève description des figures**

D'autres caractéristiques et avantages de l'invention ressortiront à la lecture de la description qui suit, en référence aux figures annexées, qui illustrent :

- la figure 1, une représentation schématique des moyens matériels permettant la mise en œuvre du procédé selon l'invention ;
- la figure 2, une illustration d'étape du procédé selon l'invention ;
- la figure 3 illustre un exemple de mise en œuvre du procédé selon l'invention.

Pour plus de clarté, les éléments identiques ou similaires sont repérés par des signes de référence identiques sur l'ensemble des figures.

L'invention sera mieux comprise la lecture de la description qui suit et à l'examen des figures qui l'accompagnent. Celles-ci sont présentées à titre indicatif et nullement limitatif de l'invention.

**Description détaillée d'un mode de réalisation**

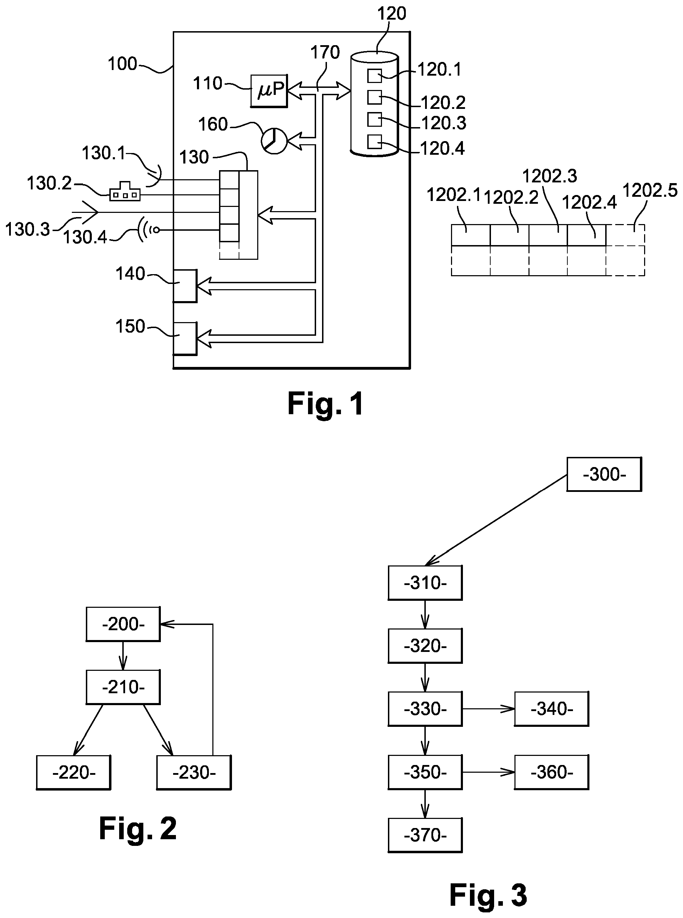

La figure 1 montre un dispositif boîtier 100 décodeur. Le boîtier 100 décodeur comporte :

- un microprocesseur 110. Il s'agit de moyens de traitement représentés de manière simplifié. Il est possible qu'un boîtier décodeur comporte plusieurs microprocesseur, avec par exemple un microprocesseur dédié au traitement d'image (décompression principalement);
- des moyens de stockage 120, par exemple un disque dur qu'il soir local ou distant, qu'il soit simple ou en grille (par exemple RAID), ou une puce mémoire ;
- au moins une interface 130 de communication pour la réception de signaux de diffusion de programmes télévisés. La figure 1 montre :

  - une interface 130.1 satellite,
  - une interface 130.2 ethernet,
  - une interface 130.3 hertzienne pour la télévision numérique terrestre,
  - une interface 130.4 wifi,
  - ... la liste n'est pas limitative ;

- une interface 140 de commande pour la réception de signaux émis par une télécommande manipulée par un utilisateur du boîtier décodeur pour interagir avec le boîtier décodeur ;

- une interface 150 sortie audio-vidéo, par exemple au format HDMI, pour raccorder le boîtier décodeur à un téléviseur ;
- une horloge 160.

Chaque interface 130.X de communication est associée à des moyens permettant au boîtier 100 décodeur de traiter plusieurs programmes simultanément. Par exemple, dans le cas de la télévision numérique terrestre ces moyens sont des tuners. Dans le cas d'une interface ethernet ou wifi, ces moyens sont une bande passante et des capacités de traitement au niveau du processeur ou d'un processeur spécialisé.

La figure 1 montre que le microprocesseur 110 du boîtier décodeur, les moyens 120 de stockage du boîtier décodeur, les interfaces 130.X pour la réception de signaux de diffusion de programmes télévisés, l'interface 140 de commande, l'interface 150 de sortie audio-vidéo et l'horloge 160 sont interconnectés par un bus 170.

La figure 1 montre que les moyens 120 de stockage comportent plusieurs zones. La figure 1 montre que les moyens 120 de stockage comportent :

- une zone 120.1 comportant des codes instructions pour la mise en œuvre du procédé selon l'invention ;
- une zone 120.2 de mémoire de favoris. La mémoire de favoris permet d'enregistrer une liste de programmes favoris. A chaque programme favori correspond un enregistrement de programme favori. On a donc une liste d'enregistrements. Un enregistrement de programme favori est, selon un mode de réalisation choisi, une ligne dans une table, un ensemble de balises XML, ... ;
- une zone 120.3 de première durée prédéterminée ;
- une zone 120.4 de deuxième durée prédéterminée correspondant à la durée à partir de laquelle on considère un programme comme intéressant un utilisateur du boîtier décodeur. Une valeur typique pour cette zone est 30 secondes.

Pour la variante décrite la figure 1 montre que la zone 120.2 de mémoire de favoris comporte les champs suivant :

- un champ 1202.1 identifiant de canal de diffusion. Un canal de diffusion est, par exemple, une chaîne de télévision. Un identifiant de diffusion permet donc la sélection d'une interface de réception de signaux de diffusion, il permet aussi l'identification de données parmi les données reçues via l'interface de réception sélectionnée. Ces données identifiées correspondent, par exemple, à la chaîne identifiées.
- un champ 1202.2 horaire de départ. Un horaire de départ s'exprime en heures et minutes entre 00h00m et 23h59m ;
- un champ 1202.3 note, par exemple un entier positif,
- un champ 1202.4 drapeau d'enregistrement permanent. Il s'agit typiquement d'une valeur booléenne.

Lorsque l'on prête une action à un dispositif celle-ci est en fait effectuée par un microprocesseur du dispositif commandé par des codes instructions enregistrés dans une mémoire du dispositif. Si l'on prête une action à une application, celle-ci est en fait effectuée par un microprocesseur du dispositif dans une mémoire duquel les codes instructions correspondant à l'application sont enregistrés. Lorsqu'un dispositif, ou une application émet ou reçoit un message, ce message est émis ou reçu via une interface de communication dudit dispositif ou de la dite application.

La figure 2 montre une étape 200 préliminaire dans laquelle le boîtier 100 décodeur lit le contenu de la zone 120.2 de mémoire de favoris.

L'étape 200 préliminaire est suivie d'une étape 210 de filtrage de la liste lue, en fonction d'un critère temporel. Le critère temporel est de la forme :

$$\text{(horaire courant} - \text{horaire de départ)} < \text{première durée prédéterminée}$$

L'horaire courant est obtenu en interrogeant l'horloge 160. La première durée prédéterminée est un paramètre qui est obtenu en lisant la zone 120.3 première durée prédéterminé des moyens de stockage.

Il est acquis que l'horaire de départ doit également être supérieur à l'horaire courant. Le critère temporel permet donc de sélectionner les enregistrements de programmes favoris qui commencent bientôt.

Un ordre de grandeur classique pour la première durée prédéterminé est de 10 secondes à quelques minutes selon la marge que l'on souhaite prendre relativement à la précision d'une grille de programmes. On peut ainsi gérer des programmes qui commenceraient plus tôt que l'horaire prévu, une dérive d'horloge, ou des horloges non synchrones.

A la fin de l'étape 210 de filtrage le boîtier 100 décodeur a donc établit une liste d'enregistrements de programmes favoris qui décrivent des programmes qui vont bientôt commencer. Cette liste peut être vide.

Si la liste est vide, le boîtier 100 décodeur passe de l'étape 210 à une étape 230 de planification dans laquelle le boîtier décodeur met le processus de prise en charge des favoris en attente. Cela revient à planifier la prochaine exécution, ou réveil, du processus.

Si le boîtier était actif au moment du démarrage du processus, alors la date de prochaine exécution dépend de la première durée prédéterminée :

$$\text{date prochaine exécution} = \text{date courante} + \text{première durée prédéterminée}$$

On peut minorer de quelques secondes cette date de quelques secondes pour prendre en compte les dérives d'ordonnancement.

Si le boîtier était en veille au moment du démarrage du processus, alors la date de prochaine exécution dépend de la liste des favoris. Avant de retourner en veille, le boîtier va programmer une date de réveil qui sera l'horaire de départ du programme favori le plus proche de la date courante.

A son réveil, ou à sa date de prochaine exécution le boîtier décodeur mettre en œuvre l'étape 200 préliminaire.

Dans une variante simple, l'étape 200 préliminaire est mise en œuvre à une période prédéterminée, par exemple toute les minutes.

Si la liste d'enregistrements de programmes favoris n'est pas vide, le boîtier 100 décodeur passe de l'étape 210 à une étape 220 de traitement des programmes favoris. Dans l'étape 220 de traitement pour chaque enregistrement de programme favori obtenu à l'étape précédente, le boîtier décodeur essaie de mettre en œuvre un mode direct différé.

Dans une variante la liste d'enregistrement de programme favori est classée par note décroissante.

Par construction un boîtier décodeur à une capacité de traitement de canal de diffusion simultané donnée. Par exemple si un boîtier décodeur comporte deux tuners, alors sa capacité de traitement de canal hertzien est de deux. Pour des canaux de diffusion réseau, par exemple par internet, la capacité dépend de la bande passante du réseau et de la capacité de traitement du microprocesseur. Une capacité de traitement simultané classique est comprise entre 8 et 16. On parle de capacité de réception ou de nombre de récepteurs. Un récepteur est aussi appelé un Front End : ce qui fait l'interface avec les signaux diffusés.

Le traitement d'un enregistrement de programme favori comporte au moins :

- la sélection d'une interface de réception d'une diffusion et l'extraction et sa configuration pour obtenir les données correspondant à l'identifiant de programme de l'enregistrement de programme favori, ou parle de récepteur ;
- l'enregistrement dans une mémoire temporaire des données reçues. La mémoire est temporaire car il s'agit d'un mode direct différé qui utilise une mémoire circulaire.

Le traitement d'un enregistrement de programme favori alloue donc une mémoire tournante et un récepteur à un enregistrement de programme favori. Il s'agit d'une mise en œuvre automatique d'un mode direct différé.

S'il y a suffisamment de ressource, en particulier de récepteur, tous les enregistrements de la liste sont traités. Sinon le traitement s'arrête dès qu'il n'y a plus de ressource disponible.

On note que le mode direct différé s'arrête à la fin du programme identifié. Le boîtier décodeur obtient automatiquement la durée du programme par interrogation du guide de programme électronique aussi appelé EPG.

On peut décrire le procédé selon l'invention par le pseudo algorithme suivant :
Tant que PpList n'est pas vide

Si Pp(i) (horaire de départ) est atteint

Si ressource disponible
Lancer le mode direct différé de Pp(i)
Sinon
Pour tous les modes direct différé de Pp(j) en cours
Si Pp(j)(note) <Pp(i)(note)

Stop Pp(j) mode direct différé
Lancer Pp(i) mode direct différé
Fin pour

Si Pp(i)(heure_fin) est atteint
Stop Pp(i) mode direct différé

Dans cette notation on a :

- PpList : la liste des enregistrement de programmes favoris,

- Pp(i) : le ième élément de PpList

Ce pseudo algorithme illustre un mode de gestion des enregistrements dans lequel on priorise la prise en compte des enregistrements en fonction de leur note.

Avec ce procédé, lorsque qu'un utilisateur change de chaine et arrive sur un programme ayant un mode direct différé automatique en cours, il pourra lui être proposé de voir le programme depuis le début par l'interface. Ce comportement peut être bien évidemment configuré dans les préférences utilisateurs. Ou il peut se déplacer dans l'enregistrement temporaire de lui-même en utilisant les boutons de déplacements rapide d'une télécommande du boîtier décodeur.

La figure 3 montre une étape 300 de surveillance, par le boîtier décodeur, des actions d'un utilisateur du boîtier décodeur. Le boîtier décodeur surveille en permanence les actions d'un utilisateur dès son démarrage. Lorsque l'utilisateur change de chaine l'algorithme, le procédé selon l'invention intercepte cette action et active un processus de mise à jour de la mémoire de programmes favoris. Si l'action de l'utilisateur est une action de changement de chaîne alors le boîtier décodeur pas à une étape 310 de déclenchement d'une temporisation.

Dans l'étape 310, le boîtier décodeur initialise un zéro temporel, par exemple en mettant un compteur à zéro ou en affectant la date courante à une variable spécifique. Puis il se met en mode attente.

Si le compteur dépasse la deuxième valeur prédéterminée alors le boîtier décodeur passe à une étape 320 d'obtention des caractéristiques du programme courant, c'est-à-dire du programme sélectionné par l'utilisateur. Cela revient à évaluer une condition de mise à jour de la mémoire des programmes favoris. Cette condition est, dans notre exemple : « l'utilisateur passe au moins une deuxième durée consécutivement devant le programme ».

Lorsque le temps minimum est atteint, le boîtier décodeur vérifie si le programme peut être ajouté à la liste des programmes favoris ou si, faute de places dans les ressources disponibles du boîtier décodeur, il entame un mécanisme de votes au sein de la liste des programmes favoris déjà en mémoire.

Dans l'étape 320 le boîtier décodeur interroge le guide électronique de programme pour obtenir au moins l'horaire de départ du programme courant. Avec ces informations, le boîtier décodeur recherche, dans une étape 330, dans la mémoire de programmes favoris pour déterminer si le programme courant s'y trouve déjà.

Cette recherche revient à poser la question : est-ce qu'il existe un enregistrement désignant la chaîne courante (lecture de l'identifiant de programme) et dont l'horaire de départ est compris dans l'intervalle formé par [horaire de départ du programme courant, horaire de départ du programme courant + durée du programme courant].

Si le programme courant existe déjà dans la mémoire des programmes favoris alors le boîtier décodeur passe à une étape 340 d'augmentation de la note dans l'enregistrement de programme favori. Dans une mise en œuvre cette augmentation de note revient à augmenter la note de 1.

Dans une variante de l'invention il existe une note maximale. Cette note maximale est un paramétrage. Dans cette variante la note d'un enregistrement de programme favori, c'est-à-dire la note associée à un programme favori, ne peut pas dépasser cette valeur maximale.

Si le programme courant n'existe pas dans la mémoire des programmes favoris alors le boitier décodeur passe à une étape 350 de détermination de la place restante dans la mémoire des programmes favoris. Pour répondre à cette question le boîtier décodeur recherche dans la mémoire de programmes favoris tous les enregistrements dont l'horaire de départ est compris dans l'intervalle [horaire de départ du programme courant, horaire de départ du programme courant + durée du programme courant]. Si le nombre d'enregistrement trouvé est inférieur à la capacité de réception du boîtier alors il reste de la place, sinon, il ne reste pas de place.

S'il reste de la place alors le boîtier décodeur passe à une étape 360 d'insertion d'un nouvel enregistrement dans la mémoire des programmes favoris. Ce nouvel enregistrement est initialisé avec :

- L'identifiant du programme courant, par exemple le numéro de chaîne ;
- L'horaire de départ du programme courant ;
- Une note initiale. Dans une variante préféré la note initiale vaut 1.

S'il ne reste plus de place alors le boîtier décodeur passe à une étape 370 de diminution des notes. Pour chaque enregistrement de la mémoire de programmes favoris dont l'horaire de départ est compris dans l'intervalle [horaire de départ du programme courant, horaire de départ du programme courant + durée du programme courant] le boîtier décodeur diminue la note de 1. Si, au cours du parcours des enregistrements, une note devient inférieur à une note minimal, alors cet enregistrement est supprimé.

Si un enregistrement est supprimé, cela libère une place pour un nouvel enregistrement qui est alors inséré comme à l'étape d'insertion d'un nouvel enregistrement.

Dans une variante préférée, la note minimale est de 1.

Dans une variante de l'invention les enregistrements sont classés par âge croissant, ce qui permet de conserver prioritairement les enregistrements les plus anciens. Dans cette variante un enregistrement de programme favori comporte un champ date 1202.5 de création pour permettre le classement.

Avec l'invention, un utilisateur n'a plus à penser à lancer lui-même un direct différé sur un programme favori ou à programmer un enregistrement. Le boîtier décodeur le fait de manière automatique en fonction de ses habitudes via la détermination des programmes favoris. Ainsi, dès d'un programme favori est diffusé, celui-ci est mis en mémoire directe différée et rendu disponible pour visualisation différée ultérieure, indépendamment du programme courant.

Si le nombre de récepteurs est suffisant et si la capacité de stockage le permet, plusieurs directs différés peuvent être lancés simultanément sur différents programmes favoris eux-mêmes diffusés simultanément ou ayant des périodes de recouvrement temporel.

En fonction du nombre N de récepteurs disponibles dans le décodeur et de K enregistrements déjà programmés : N-K-1 directs différées de programmes favoris simultanés peuvent être lancés au maximum ; 1 récepteur étant réservé au programme courant.

Avec l'invention le début d'un programme favori est visualisable en mode direct différé, c'est-à-dire que l'utilisateur à accès au programme en différé du début à la fin de celui-ci, même s'il ne l'a pas regardé depuis le début.

Si le boîtier décodeur dispose d'une zone de stockage permanente (type disque dur), il est aussi possible, dans une variante, de proposer une option de conservation/archivage du « programme favori ». Cette option est matérialisée par un champ drapeau au niveau d'un enregistrement de programme favori. Si ce champ stocke une valeur « vraie », alors le programme est enregistré pour une visualisation ultérieure, c'est-à-dire pas une visualisation en mode direct différé. Dans ce cas le programme favori est transféré depuis la mémoire de direct différé vers une zone de stockage permanent du disque du boîtier décodeur. La valeur du champ drapeau est alimenté par une interface homme machine adaptée.

## Revendications

1. Procédé de déclenchement automatique d'un mode direct différé par un boîtier (100) décodeur, le mode direct différé étant un mode de visualisation d'un programme diffusé en directe permettant une mise en pause de ladite diffusion et une navigation temporelle dans ladite diffusion, **caractérisé en ce que** le procédé comporte les étapes suivantes :

   - Lecture (200) automatique par un moyen de lecture du boîtier décodeur, dans une mémoire (120.2) de favoris du boîtier décodeur, d'une liste d'enregistrements de programmes favoris, un enregistrement de programme favoris comportant au moins un horaire (1202.2) de départ et un identifiant (1202.1) d'un canal de diffusion,
   - Filtrage (210) automatique de la liste des enregistrements de programmes favoris selon un critère temporel pour sélectionner des enregistrements qui correspondent à des programmes favoris qui démarrent moins d'une première durée (120.3) prédéterminée après une date courante,
   - Pour chaque enregistrement sélectionné, allocation (220) de ressources de mode directe différé, ces ressources comportant au moins un récepteur et une mémoire temporaire, de type mémoire circulaire, pour le déclenchement d'un mode direct différé,

   **caractérisé en ce que** la liste d'enregistrements de programmes favoris est mise à jour automatiquement en fonction de l'utilisation faîte du boîtier décodeur, au moins une action de l'utilisateur provoquant une évaluation d'une condition de mise à jour de la liste d'enregistrement de programmes favoris, et **en ce que** la au moins une action est une action de changement de chaîne, un tel changement de chaîne provoquant l'initialisation d'un zéro temporel, la condition de mise à jour étant le dépassement d'une deuxième durée prédéterminée par rapport au zéro temporel.

2. Procédé de déclenchement automatique d'un mode direct différé selon la revendication précédente, **caractérisé en ce qu'**un enregistrement de programme favoris comporte une note pour classer les enregistrements de programmes favoris en cas de concurrence entre eux, un enregistrement étant ajouté à la liste avec une note initiale prédéterminée.

3. Procédé de déclenchement automatique d'un mode direct différé selon la revendication 2, **caractérisé en ce que** la note augmente à chaque fois qu'une évaluation d'une condition de mise à jour de la liste d'enregistrement de programmes favoris, lié à l'enregistrement par l'horaire et l'identifiant de canal, est évaluée à vraie.

4. Procédé de déclenchement automatique d'un mode direct différé selon la revendication 2, **caractérisé en ce que** la liste d'enregistrement de programme favori a une capacité limitée, un enregistrement étant retiré de la liste quand sa note atteint une note minimale prédéterminée.

5. Procédé de déclenchement automatique d'un mode direct différé selon la revendication 2, **caractérisé en ce que** les notes diminuent à chaque fois qu'une évaluation d'une condition de mise à jour de la liste d'enregistrement de programmes favoris, la condition étant liée aux enregistrements par l'horaire, est évaluée à vraie et que la capacité maximale de la liste est atteinte.

6. Procédé de déclenchement automatique d'un mode direct différé selon l'une des revendications 4 ou 5, **caractérisé en ce que** la capacité maximale de la liste est égale au nombre de canal de diffusion que le boîtier décodeur a la capacité de traiter simultanément.

7. Procédé de déclenchement automatique d'un mode direct différé selon l'une des revendications précédentes **caractérisé en ce que**, lors d'une mise en veille, le boîtier décodeur planifie (230) un réveil à une date sensiblement égale à l'horaire de départ du prochain enregistrement de programme préféré, la notion de prochain étant évaluée relativement à la date de la mise en veille.

8. Procédé de déclenchement automatique d'un mode direct différé selon l'une des revendications précédentes **caractérisé en ce qu'**il comporte une étape d'enregistrement permanent d'un programme favoris selon que l'enregistrement de programme favoris correspondant audit programme favoris comporte un drapeau de qualification de l'enregistrement pour en faire une instruction d'enregistrement permanent.

9. Dispositif mémoire non transitoire comportant des codes instructions pour la mise en œuvre du procédé selon l'une des revendications précédentes.

10. Dispositif (100) décodeur mettant en œuvre un procédé de déclenchement automatique d'un mode direct différé selon l'une des revendications 1 à 8.

11. Produit programme d'ordinateur comprenant des instructions qui, lorsque le programme est exécuté par un dispositif, conduisent celui-ci à mettre en œuvre les étapes de du procédé selon l'une des revendications 1 à 8.

## Patentansprüche

1. Verfahren zum automatischen Auslösen eines verzögerten Direktmodus durch eine Set-Top-Box (100), wobei der verzögerte Direktmodus ein Visualisierungsmodus eines direkt gesendeten Programms ist, der ein Pausieren der Sendung und eine zeitliche Navigation in der Sendung gestattet, **dadurch gekennzeichnet, dass** das Verfahren die folgenden Schritte umfasst:

   - automatisches Lesen (200) einer Lieblingsprogramm-Aufzeichnungsliste in einem Favoritenspeicher (120.2) der Set-Top-Box durch ein Lesemittel der Set-Top-Box, wobei eine Aufzeichnung eines Lieblingsprogramms mindestens eine Startzeit (1202.2) und eine Kennung (1202.1) eines Sendekanals umfasst,
   - automatisches Filtern (210) der Lieblingsprogramm-Aufzeichnungsliste nach einem zeitlichen Kriterium, um Aufzeichnungen auszuwählen, die Lieblingsprogrammen entsprechen, die weniger als eine erste vorgegebene Dauer (120.3) nach einem aktuellen Datum beginnen,
   - Zuweisen (220) verzögerter Direktmodusressourcen zu jeder ausgewählten Aufzeichnung, wobei diese Ressourcen mindestens einen Empfänger und einen temporären Speicher vom Typ Ringspeicher für die Auslösung eines verzögerten Direktmodus aufweisen,

   **dadurch gekennzeichnet, dass** die Lieblingsprogramm-Aufzeichnungsliste automatisch in Abhängigkeit von der erfolgten Nutzung der Set-Top-Box aktualisiert wird, wobei mindestens eine Aktion des Benutzers eine Bewertung einer Aktualisierungsbedingung der Lieblingsprogramm-Aufzeichnungsliste bewirkt und dass die mindestens eine Aktion eine Kanalwechselaktion ist, wobei ein derartiger Kanalwechsel die Initialisierung einer Zeitmarke bewirkt, wobei die Aktualisierungsbedingung das Überschreiten einer zweiten vorbestimmten Dauer in Bezug auf die Zeitmarke ist.

2. Verfahren zum automatischen Auslösen eines verzögerten Direktmodus nach vorhergehendem Anspruch, **dadurch gekennzeichnet, dass** bei einer Konkurrenz untereinander eine Lieblingsprogrammaufzeichnung eine Note zur Einstufung der Lieblingsprogrammaufzeichnungen aufweist, wobei der Liste eine Aufzeichnung mit einer vorgegebenen Anfangsbewertung hinzugefügt wird.

3. Verfahren zum automatischen Auslösen eines verzögerten Direktmodus nach Anspruch 2, **dadurch gekennzeichnet, dass** sich die Note jedes Mal verbessert, wenn eine Bewertung einer Aktualisierungsbedingung der Lieblingsprogramm-Aufzeichnungsliste in Verbindung mit der Aufzeichnung nach Zeit und Kanal-ID als wahr bewertet wird.

**4.** Verfahren zum automatischen Auslösen eines verzögerten Direktmodus nach Anspruch 2, **dadurch gekennzeichnet, dass** die Lieblingsprogramm-Aufzeichnungsliste eine begrenzte Kapazität hat, wobei eine Aufzeichnung aus der Liste entfernt wird, wenn ihre Note eine vorgegebene minimale Note erreicht.

**5.** Verfahren zum automatischen Auslösen eines verzögerten Direktmodus nach Anspruch 2, **dadurch gekennzeichnet, dass** sich die Noten jedes Mal verschlechtern, wenn eine Bewertung einer Aktualisierungsbedingung der Lieblingsprogramm-Aufzeichnungsliste als wahr bewertet wird, wobei die Bedingung mit den Aufzeichnungen nach Zeit verbunden ist, und die maximale Kapazität der Liste erreicht ist.

**6.** Verfahren zum automatischen Auslösen eines verzögerten Direktmodus nach einem der Ansprüche 4 oder 5, **dadurch gekennzeichnet, dass** die maximale Kapazität der Liste gleich der Anzahl der Sendekanäle ist, die die Set-Top-Box gleichzeitig verarbeiten kann.

**7.** Verfahren zum automatischen Auslösen eines verzögerten Direktmodus nach einem der vorhergehenden Ansprüche, **dadurch gekennzeichnet, dass** die Set-Top-Box im Standby ein Aufwachen zu einem Datum plant (230), das im Wesentlichen gleich der Startzeit der nächsten Lieblingsprogrammaufzeichnung ist, wobei der Begriff des Nächsten relativ zum Datum des Standbys bewertet wird.

**8.** Verfahren zum automatischen Auslösen eines verzögerten Direktmodus nach einem der vorhergehenden Ansprüche, **dadurch gekennzeichnet, dass** es einen Schritt der ständigen Aufzeichnung eines Lieblingsprogramms aufweist, sofern die Aufzeichnung des dem Lieblingsprogramm entsprechenden Lieblingsprogramms eine die Aufzeichnung qualifizierende Flagge aufweist, um daraus eine Anweisung zur ständigen Aufzeichnung zu machen.

**9.** Nichtflüchtige Speichervorrichtung, die Befehlscodes zur Durchführung des Verfahrens nach einem der vorhergehenden Ansprüche aufweist.

**10.** Set-Top-Vorrichtung (100), die ein Verfahren zum automatischen Auslösen eines verzögerten Direktmodus nach einem der Ansprüche 1 bis 8 durchführt.

**11.** Rechnerprogrammprodukt, das Befehle umfasst, die, wenn das Programm von einer Vorrichtung ausgeführt wird, diese dazu veranlassen, die Schritte des Verfahrens nach einem der Ansprüche 1 bis 8 durchzuführen.

**Claims**

**1.** 1. Method for automatically triggering a delayed direct mode by a decoder box (100), the delayed direct mode being a mode for viewing a programme broadcast live, allowing the broadcast to be paused and time navigation within the broadcast, **characterised in that** the method comprises the following steps:

- Automatic reading (200) by a reading means of the decoder box, in a favourites memory (120.2) of the decoder box, of a list of favourite programme recordings, a favourite programme recording comprising at least a start time (1202.2) and an identifier (1202.1) of broadcast channel identifier,
- Automatic filtering (210) of the list of favourite programme recordings according to a time criterion to select recordings that correspond to favourite programmes that start less than a first predetermined time (120.3) after a current date,
- For each selected recording, allocation (220) of deferred direct mode resources, these resources comprising at least one receiver and a temporary memory, of the circular memory type, for triggering a deferred direct mode, **characterised in that** the list of favourite programme recordings is automatically updated according to the use made of the decoder box, at least one user action causing an evaluation of a condition for updating the list of favourite programme recordings, and **in that** the at least one action is a channel change action, such a channel change causing the initialisation of a time zero, the update condition being the elapse of a second predetermined time relative to the time zero.

**2.** Method for automatically triggering a delayed direct mode according to the previous claim, **characterised in that** a favourite programme recording includes a note for classifying the favourite programme recordings in the event of competition between them, a recording being added to the list with a predetermined initial note.

**3.** Method for automatically triggering a delayed direct mode according to claim 2, **characterised in that** the note increases each time an evaluation of an update condition of the favourite programme recording list, linked to the recording by the schedule and the channel identifier, is evaluated as true.

4.  Method for automatically triggering a delayed direct mode according to claim 2, **characterised in that** the favourite programme recording list has a limited capacity, a recording being removed from the list when its rating reaches a predetermined minimum rating.

5.  Method for automatically triggering a delayed direct mode according to claim 2, **characterised in that** the ratings decrease each time an evaluation of a condition for updating the favourite programme recording list, the condition being linked to recordings by schedule, is evaluated as true and the maximum capacity of the list is reached.

6.  Method for automatically triggering a deferred direct mode according to one of claims 4 or 5, **characterised in that** the maximum capacity of the list is equal to the number of broadcast channels that the set-top box is capable of processing simultaneously.

7.  Method for automatically triggering a delayed direct mode according to one of the preceding claims, **characterised in that**, when in standby mode, the set-top box schedules (230) a wake-up at a time substantially equal to the start time of the next recording of the preferred programme, the concept of 'next' being evaluated relative to the date of the standby mode.

8.  Method for automatically triggering a delayed direct mode according to one of the preceding claims, **characterised in that** it comprises a step of permanently recording a favourite programme depending on whether the recording of the favourite programme corresponding to said favourite programme includes a recording qualification flag to make it a permanent recording instruction.

9.  Non-transitory memory device comprising instruction codes for implementing the method according to one of the preceding claims.

10. Decoder device (100) implementing a method for automatically triggering a delayed direct mode according to one of claims 1 to 8.

11. Computer program product comprising instructions which, when the program is executed by a device, cause the device to implement the steps of the method according to one of claims 1 to 8.

**Fig. 1**

**Fig. 2**

**Fig. 3**

**EP 3 501 168 B1**

## RÉFÉRENCES CITÉES DANS LA DESCRIPTION

**Documents brevets cités dans la description**

- JP 2015076828 B